# EUROPEAN PATENT SPECIFICATION

(11) **EP 3 915 030 B1**
(45) Date of publication and mention of the grant of the patent: **18.10.2023**
(21) Application number: 19926852.5
(22) Date of filing: 30.04.2019
(51) Int. Cl.: G06F 21/57, G06F 12/02, G06F 21/44

(54) **STORAGE OF NETWORK CREDENTIALS**
SPEICHERUNG VON NETZWERKANMELDEINFORMATIONEN
STOCKAGE DE JUSTIFICATIFS D'IDENTITÉ DE RÉSEAU

(43) Date of publication of application: 01.12.2021
(73) Proprietor: Hewlett-Packard Development Company, L.P., Spring TX 77389 (US)
(72) Inventor: BRAMLEY, Richard, Spring, Texas 77389 (US); PROVENCHER, Michael, Mansfield, Massachusetts 02048 (US); STAUB, Charles Ricardo, 90619-900 Porto Alegre (BR)
(74) Representative: Appleyard Lees IP LLP
(86) International application number: PCT/US2019/029788
(87) International publication number: WO 2020/222774

(56) References cited:
- US-A1- 2006 165 060
- US-A1- 2006 230 165
- US-A1- 2011 099 361
- US-A1- 2018 097 639
- US-B2- 7 340 594
- US-B2- 7 555 783
- US-B2- 8 205 037
- US-B2- 8 849 249

## Description

### BACKGROUND

In computing, booting involves starting up a computing apparatus so that it can be used. The booting process can be initiated by hardware such as a button press or by command. After the power is switched on, the computer is relatively limited to part of its storage that performs power-on self-tests and allows access to other types of memory. Restarting a computer also is referred to as a reboot, which can be "hard" as in a "hard start" such as after electrical power to the computer is switched from off to on, or "soft" where the electrical power is not cut. Patent document US2006/230165 is related prior art.

### BRIEF DESCRIPTION OF FIGURES

Various examples may be more completely understood in consideration of the following detailed description in connection with the accompanying drawings, in which:
FIG. 1 illustrates an example block diagram of a computing apparatus including an agent application, consistent with the present disclosure;
FIG 2 illustrates an example block diagram of a computing apparatus including an agent application, consistent with the present disclosure;
FIG. 3 illustrates an example flow chart for storage of network credentials, consistent with the present disclosure;
FIGs. 4A-4C illustrate example flowcharts for storage of network credentials during preboot, storage of network credentials during reboot, and update of network credentials, consistent with the present disclosure; and
FIG. 5 illustrates an example block diagram of a computing device including instructions for storage of network credentials, consistent with the present disclosure.

### DETAILED DESCRIPTION

Examples described herein are applicable to a variety of different systems and methods including, for example, a computing apparatus in which a first memory store an operating system (OS) for an associated computer processor of the computing apparatus. In an example, the computing apparatus may include a second memory to store firmware for initiating the computing apparatus, and a controller, where the controller is communicatively coupled to the first memory, the second memory, and a third memory. Responsive to powering on the computing apparatus, the OS may access an agent application in the first memory, provision a wireless network credential using the agent application, and encrypt the wireless network credential using the agent application. The firmware may, in response to receiving the encrypted wireless network credential from the first memory, store the encrypted wireless network credential in the third memory. In some examples, the computing apparatus may act to protect access to a set of encryption keys used to encrypt the wireless network credential.

Some examples described herein may allow for rapid system setup and increased ease of configuration. Access to a network may be protected with credentials which restricts access to a network based on identity or security posture. Such credentials can force user or machine authentication prior to granting access to the network. Moreover, wired and wireless networks may implement security processes and thereby limiting access to the network. Also, in some locations and/or with some computing devices access immediate or full access to such networks is limited, particularly during such initial or pre-boot operations. Examples described herein may overcome such issues, for example, by using a digitally signed firmware driver and an agent application which enable simplified and secure configuration of firmware.

For example, a non-transitory computer-readable storage medium may include instructions that, when executed, cause a computing apparatus to provision, using an agent application installed on the compuitng apparatus, a wireless network credential and to encrypt, using an agent application installed on the compuitng apparatus, a wireless network credential. Responsive to a reboot of the computing apparatus, the encrypted wireless network credential is transferred to firmware of the computing apparatus for initiating the computing apparatus, and the wireless network credential is stored during reboot of the computing apparatus and using the firmware.

As another example, a non-transitory computer-readable storage medium may include instructions that, when executed, cause a computing apparatus to store a wireless network credential for the computing apparatus, in a memory of the computing apparatus. Responsive to receipt of a request from an agent application installed on the OS of the computing apparatus to update the wireless network credential, the instructions cause the computing apparatus to access an encrypted wireless network credential stored in the memory. The processor decrypts the encrypted wireless network credential, and applies the decrypted wireless network credential to the OS of the computing apparatus for access to a wireless communciations network.

The above and other examples are described herein with the understanding that these examples may be practiced without disclosing all the specific details and that features from among the various examples may be combined with one another. For ease of illustration, the same reference numerals may be used in different diagrams to refer to the same elements or additional instances of the same element.

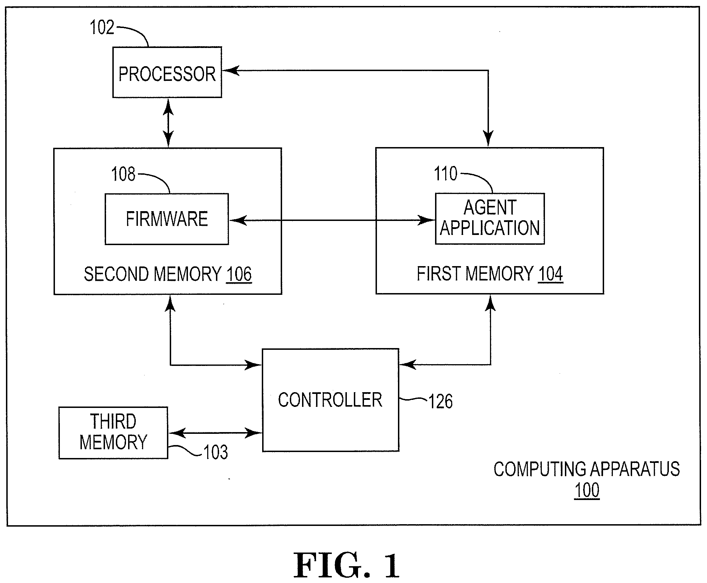

Turning now to the figures, FIG. 1 illustrates an example block diagram of a computing apparatus 100 including an agent application 110, consistent with the present disclosure. The functional blocks in FIG. 1 may be circuits configured or coded by design and/or by configurable circuitry such as CPUs, logic arrays, and/or controllers, for carrying out such operational aspects.

In various examples, computing apparatus 100 may be, for example, a web-based server, a local area network server, a cloud-based server, a notebook computer, a desktop computer, an all-in-one system, a tablet computing device, a mobile phone, an electronic book reader, or any other electronic device suitable to execute an agent application 110 to monitor computing apparatus 100. Computing apparatus 100 may include a processor 102, a first memory 104, a second memory 106, and a controller 126. Processor 102 may be in communication with first memory 104 and/or second memory 106. Processor 102 may control operations of computing apparatus 100. The first memory 104 and the second memory 106 may store data. In some examples, first memory 104 and the second memory 106 may be implemented using non-volatile memory, such as hard disk drives, solid state storage, flash memory, and Electrically Erasable Programmable Read-Only Memory (EEPROM), among others. As used herein, a controller refers to or includes a chip, an expansion card, or a stand-alone device that interfaces with the processor 102. In some non-limiting examples, the controller 126 may refer to or include an embedded controller, though examples are not so limited.

Computing apparatus 100 may further include firmware 108 stored in second memory 106. As used herein, firmware refers to or includes instructions that can be configured for implementation in logic circuitry, with the instructions by way of code, and as may be stored in and accessible from a memory circuit. The firmware 108 may control low-level operations of computing apparatus 100, such as hardware initiations during boot up. In an example, firmware 108 may be implemented as a Basic Input/Output System (BIOS) of computing apparatus 100. Additionally and/or alternatively, the firmware 108 may be implemented as unified extensible firmware interface (UEFI). The firmware 108 may be implemented using instructions executable by processor 102.

In yet another example, the processor 102 is implemented as a multi-core processor or a processor circuit implemented as a set of processor circuits integrated as a chip set. In these and other examples, it is appreciated that such processor circuitry includes a single, or multiple computer circuits including memory circuitry for storing and accessing firmware or program code to be accessed or executed as instructions to perform the related operation(s).

During operation, when the computing apparatus 100 is booting up, a firmware interface may access an agent application 110 in the first memory 104 to obtain various network credentials. As used herein, the firmware interface refers to or includes instructions that allow the firmware to connect with the OS of the computing apparatus. Similarly, once the computing apparatus 100 boots up, the agent application 110 may be provisioned, locally via a user with administrative authority, and/or remotely by an administrator that may push configurations to the computing apparatus 100. The firmware interface may be installed at the time a computing apparatus is manufactured, and may be among the first programs that run when a computing apparatus is turned on. The firmware interface may perform a check to see what hardware components are included in the computing apparatus, wake the hardware components up, and interface the hardware components with the OS. During this 'pre-boot' phase, the computing apparatus has limited network capabilities.

In various examples, the installation data may also be stored in second memory 106. In some examples, the installation data may be included as part of the firmware 108, while in other examples, the installation data may be stored in another device that the firmware 108 may access to perform the installation. Where reference is made to a "first memory", a "second memory", etc., the adjectives "first" and "second" are not used to connote any description of the structure or to provide any substantive meaning; rather, such adjectives are merely used to differentiate one circuit from another similarly-named circuit.

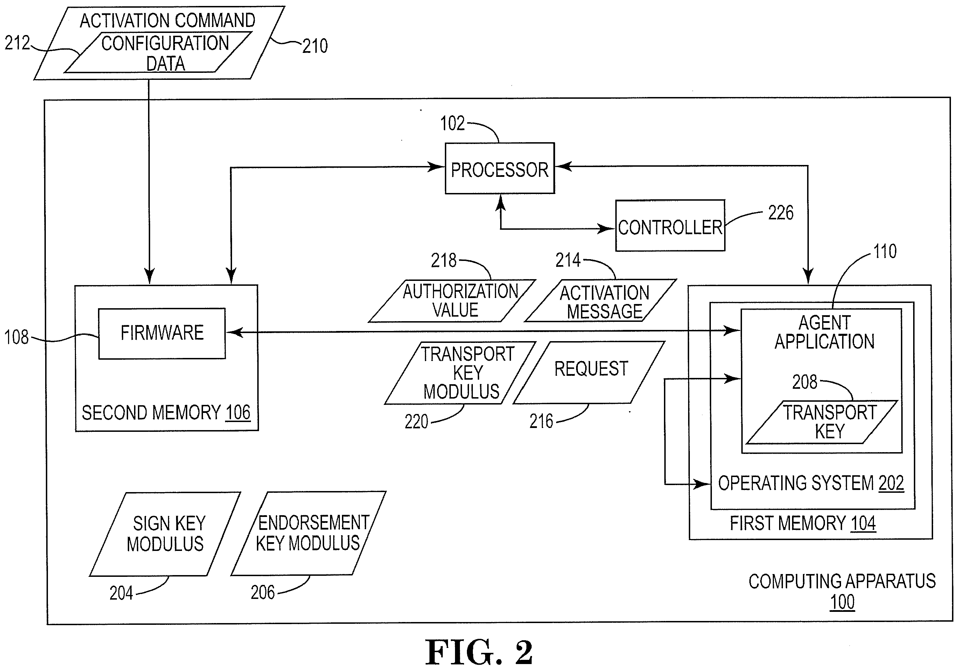

In additional examples, the agent application 110 may be implemented using instructions executable by the processor 102. As described in more detail in FIG. 2, the agent application 110 may monitor the computing apparatus 100 based on instructions, which may also be stored in the second memory 106. The computing apparatus 100 may receive the instructions from an external source, such as an IT administrator, a server, or a user of the computing apparatus 100. The agent application may be imlemented using processor executable instructions.

Further, in response to input of a personal identifier, the OS may execute instructions in the first memory to protect access to a subset of encryption keys used to encrypt the wireless network credential. For instance, a user may enroll a personal identification number (PIN) which is to be used to protect access to a sign key and an endorsement key, as discussed further herein. A subset of encryption keys and data indicative of the subset of encryption keys may be created on the first memory 104, and the data indicative of the subset of encryption keys may be sent to the second memory 106. In such examples, the OS may execute instructions in the first memory 104 to access the agent application upon boot-up of the OS. Also, in response to receipt of the subset of encryption keys from a storage location remote to the first memory, the OS may execute instructions in the first memory 104 to send data indicative of the subset of encryption keys to the second memory.

The apparatus of FIG. 1 may be implemented in a variety of manners. For example, a computing apparatus 100 including a processor 102 and a first memory 104 to store an OS of the computing apparatus 100 may, responsive to power-on of the computing apparatus 100, install an agent application 110 in the first memory 104 using the OS. For instance, the computing apparatus 100 may install instructions to provision the agent application 110. The computing apparatus 100 may further provision a wireless network credential or a plurality of wireless network credentials using the agent application 110, and encrypt the wireless network credential using the agent application 110. Further included is a second memory 106 to store firmware for initiating the computing apparatus 100. The firmware, in response to receiving the encrypted wireless network credential from the first memory 104, may store the encrypted wireless network credential in a third memory 103 connected to the controller 126. In various examples, the third memory 103 may be any non-volatile memory, such as EEPROM, and/or flash memory, among others.

In various examples, to ensure the computing apparatus 100 boots in a secure manner, the agent application 110 can implement a secure protocol to check if any of the binaries in the boot sequence fail cryptographic signature checks. In the event a binary does fail this cryptographic signature check, it is not allowed to run. By running from firmware and authenticating other code, such as the binaries, before it is executed, and through the execution of various techniques for provisioning wireless network credentials, a secure connection between the OS and the firmware can be created, thereby denying the launch of malicious code.

Once the OS starts, the agent application 110 may be provisioned in the system. The agent application may be provisioned locally or remotely. In the first case, a user with administrative privileges can configure the agent application 110. In the second case, the administrative user is to push the configuration remotely to the managed computing apparatus 100. As used herein, to remotely configure the managed computing apparatus refers to or includes a second computing apparatus that is different than the managed computing apparatus, sending processor executable instructions to the managed computing apparatus so as to configure the managed computing apparatus. Accordingly, the agent application 110 may be provisioned locally by a user with administrative privileges, and/or the agent application 110 may retrieve the wireless network credential(s) from a memory remote to the first memory 104.

In both scenarios, three encryption keys may be utilized. A first key is a sign key, which may be used to sign the provisioning commands to enable the agent application 110 to transmit data to the firmware 108. A second key is an endorsement key, which may be used to remove and deactivate the agent application 110 from the OS and deactivate the secure communication protocol from the computing apparatus 100. A third key may be a transport key, used to encrypt and/or decrypt the wireless network credential data that may be exchanged between the OS and the firmware.

In some examples, the wireless network credential may be encrypted using a first key to sign provisioning commands to enable the agent to transfer data to the firmware, a second key to remove and deactive the agent from the computing apparatus, and a third key to encrypt and decrypt a wireless network credential that is exchanged between an OS of the computing apparatus and the firmware. An activation command may be encrypted with the first key, and the encrypted activation command may be sent to the firmware to activate the agent application. Further, an authorization value may be sent to the agent application to protect the third key, and responsive to receipt, by the agent application, of the authorization value, the third key may be created to transfer the encrypted wireless network credential to the firmware.

In various examples, in response to input of a personal identifier at the computing apparatus 100, the first memory 104 included in the computing apparatus 100 may protect access to a subset of encryption keys used to encrypt the wireless network credential. For instance, access to the sign and endorsement keys may be protected. A subset of encryption keys and data indicative of the subset of encryption keys may be created (e.g., provisioned) on the first memory 104, and the data indicative of the subset of encryption keys may be sent to the second memory 106. For instance, the sign key and the endorsement key may be provisioned and sent to the second memory 106.

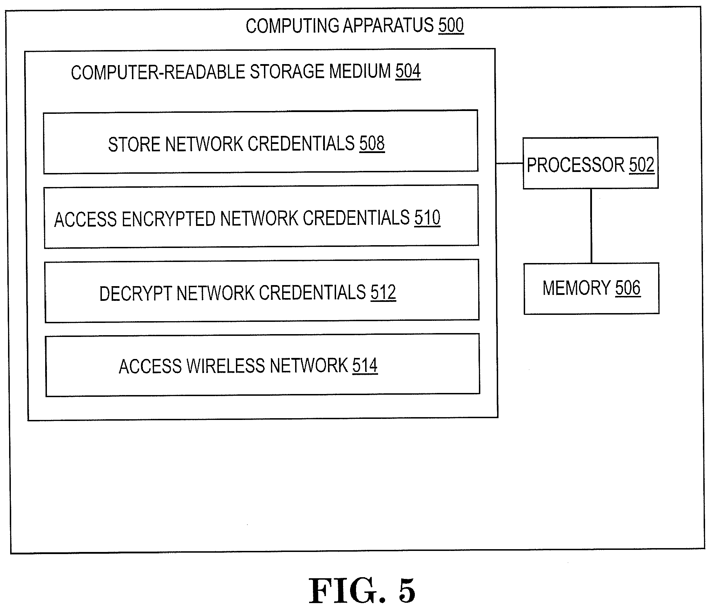

As illustrated and discussed above in connection with Fig. 1 and elsewhere in the instant disclosure, various circuit-based structure is disclosed for carrying out specific acts or functions, as may be recognized in the figures and related discussion. Whether depicted as a block, module, device, system, or controller (for example), such circuit-based structure refers to or includes circuitry designed to carry the acts or functions as so described. As specific examples of such circuit-based structure, among others reference may be made to 108 and 110 of Fig. 1 and 508-514 of FIG. 5.

FIG 2 illustrates an example block diagram of computing apparatus 100 including an agent application 110, consistent with the present disclosure. As described in FIG. 1, firmware 108 may install the agent application into first memory 104 during a boot-up operation of the computing apparatus 100. In some examples, the firmware 108 may install the agent application 110 in an operating system 202 of computing apparatus 100.

Once the agent application 110 is installed, the agent application 110 may be dormant. To enable agent application 110 to enable computing apparatus 100 to boot, such as during a pre-boot operation or following a re-boot command, a plurality of secured protocols may be used. As used herein, a secured protocol may mean a system/method for encrypting data, such as public key cryptography. For examples, three cryptography keys are used to enable the agent application 110 to boot the computing apparatus 100: a sign key (not shown), an endorsement key (not shown), and a transport key 208.

The sign key may be used to sign commands issued to firmware 108 to control the agent application 110. The endorsement key may be used to sign a deactivate command sent to the firmware 108 to deactivate and/or remove the agent application 110 from the computing apparatus 100.

The sign key and the endorsement key may be generated locally at the computing apparatus 100, or remotely at, for instance, a server. In some examples, a sign key modulus 204 and an endorsement key modulus 206 may be sent to the firmware 108 when the firmware 108 already have exponents of the sign key and the endorsement key. The sign key modulus 204 and the endorsement key modulus 206 may be stored in the second memory 106. In other examples, the sign key modulus 204 and the endorsement key modulus 206 may be stored in another storage device of the computing apparatus 100 that the firmware 108 can access. In some examples, the sign key (i.e., modulus and exponent) and the endorsement key (i.e., modulus and exponent) may be sent to the firmware 108.

For a locally managed computing apparatus 100 and/or system, and in accordance with various examples presented herein, the technique(s) for provisioning the wireless network credential may include the user of the computing apparatus 100 entering a personal identifier, such as a passphrase or PIN, used to protect the access to the sign and endorsement keys (not shown). The sign and endorsement keys that are created and their encrypted blobs may be stored locally on the computing apparatus 100. Then, the public modulus of the sign key 204 and the public modulus of the endorsement key 206 may be sent to the firmware 108. For a remotely managed system, the technique(s) for provisioning the wireless network credential may include the IT administrator creating the sign and endorsement keys remotely. The public modulus of the sign key 204 and the public modulus of the endorsement key 206 may then be sent to the firmware 108 through the network.

The firmware 108 may receive an activation command 210 that instructs the firmware 108 to activate the agent application 110. The activation command 210 may also include configuration data 212 of the agent application 110. In response to receiving the activation command 210, the firmware 108 may transmit an activation message 214 that includes the configuration data 212 to activate the agent application 110. In response to receiving the activation message 214, the agent application 110 may configure settings of the agent application 110 based on the activation message 214.

Once the firmware 108 of the computing apparatus 100 receives the sign and endorsement keys, the boot instruction commands can be issued. The first command is to activate the agent application 110 in the operating system 202. By doing so, the activation command 210 and the configuration settings of the agent application 110 may be encrypted and sent to the firmware 108, causing the agent application 110 to enter in an active state. While in the active state, the agent application 110 may begin executing in operating system 202. The agent application 110 may also transmit a request 216 to the firmware 108 to request an authorization value 218. In response to receiving the request 216, the firmware 108 may also transmit the authorization value 218 to the agent application 110 to generate the transport key 208. The agent application 110 may use the transport key 208 to enable data to be exchanged between the agent application 110 and the firmware 108.

Additionally, upon provisioning the sign and endorsement keys and the agent application 110 entering the active state, the agent application 110 may request the authorization value 218 from the firmware 108, or from any other auxiliary instructions and/or hardware included in the computing apparatus 100 holding that value, which is to be used to protect the transport key 208. Upon receiving the authorization value 218, the agent application 110 may create the transport key 208 and send the public modulus of the transport key 208 to the firmware 108, both in the locally and remotely managed scenarios described above. To create and provision the transport key 208, the agent application 110 receives the transport authorization value 218 from, for instance, the firmware 108, creates the transport key 208 by signing the authorization value 218 to protect that particular transport key, and sends the public modulus of the transport key 220 to the firmware 108. The firmware 108 may then use the transport key modulus 220 and authorization value 218 to create a copy of the transport key 208.

In additional examples, responsive to a reboot of the computing apparatus 100, the second memory 106 may send a request to access to a wireless network, retrieve the encrypted wireless network credential from the controller 226, and decrypt the wireless network credential using the plurality of decryption keys, as discussed further herein.

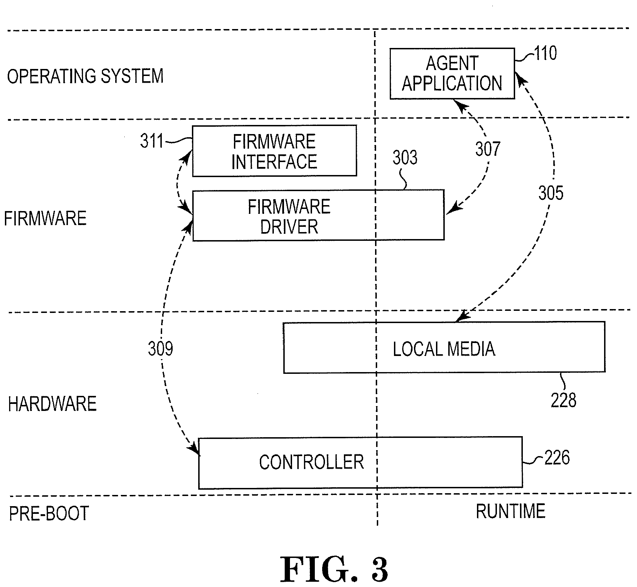

FIG. 3 illustrates an example flow chart for storage of network credentials, consistent with the present disclosure. Particularly, FIG. 3 illustrates an example arrangement of a set of components for storage of network credentials. Agent application 110, as discussed herein, refers to or includes an agent application that runs in the OS of the computing apparatus, and a firmware driver 303 refers to or includes a system management mode driver that is in the firmware 108.

As described herein, the agent application 110 may get and/or set wireless network credentials, which are embedded in a network profile that has other metadata associated with network connections, from and/or to the file system at 305. The agent application 110 may get and/or set wireless network credentials, from and/or to, local media 228 including, as non-limiting examples, a hard disk drive (HDD), a solid state drive (SDD), and/or a self-encrypting hard drive (SED), among other types of local media.

As discussed herein, the agent application 110 encrypts the network credential data and sends it to firmware driver 303 in the firmware 108, such as at 307. In response, at 309, the firmware driver sends the encrypted network credential data to a controller 226 for secure storage, such as in third memory 103 illustrated in FIG. 1. In a similar manner, when the OS is to update its network credential data base from the firmware, the agent application 110 may make a request to the firmware driver 303, which in turn, makes a request to the controller 226 to get the desired data.

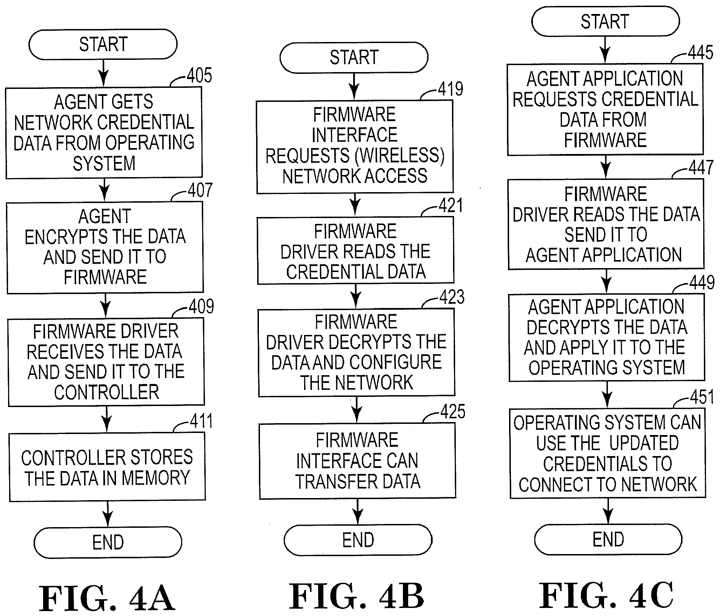

FIGs. 4A-4C illustrate example flowcharts for storage of network credentials during preboot, storage of network credentials during reboot, and update of network credentials, consistent with the present disclosure. Particularly, from the level of the operating system 202, FIG. 4A, illustrates an example flowchart for storage of network credentials during preboot. At 405, the agent application may launch and retrieve the wireless network credential data from the OS of the computing apparatus. At 407, agent application (e.g., 110 illustrated in FIGs. 1 and 2) encrypts the network credentials, as hereinbefore described, and sends the encrypted network credentials to the firmware interface through the store credentials command. At 409, the firmware driver receives the wireless network credential(s) and sends the wireless network credential(s) to secure storage via the controller (e.g., 226 illustrated in FIG. 3). Responsive to receiving the wireless network credential, at 411, the controller stores the wireless network credential in memory, such as in third memory 103 illustrated in FIG. 1.

From the level of the OS, FIG. 4B, illustrates an example flowchart for storage of network credentials following reboot. After a reboot, at 419, a network dependent (e.g., wireless) firmware interface (311 illustrated in FIG. 3) may request network access, and at 421, the firmware driver may read the wireless network credential from the controller. At 423, the wireless network credential may be decrypted, as hereinbefore described, and configured for the wireless local area network (WLAN) so the firmware interface can transfer data across the network at 425.

From the level of the OS, FIG. 4C, illustrates an example flowchart for updating wireless network credential data from firmware interface. At 445, the agent application makes a request to the firmware driver through a store credential command At 447 the firmware driver reads the data from the controller, and sends the wireless network credential to the agent application. At 449, upon receiving the wireless network credential, the agent application decrypts the wireless network credential and applies the wireless network credential to the OS, thereby enabling the OS to connect to a WiFi network using the updated wireless network credential at 451.

FIG. 5 illustrates an example block diagram of a computing apparatus including instructions for storage of network credentials, consistent with the present disclosure. The computing apparatus 500 may include a processor 502, a computer-readable storage medium 504, and a memory 506.

The processor 502 may be a central processing unit (CPU), a semiconductor-based microprocessor, and/or other hardware devices suitable to control operations of the computing apparatus 500. Computer-readable storage medium 504 may be an electronic, magnetic, optical, or other physical storage device that contains or stores executable instructions. Thus, computer-readable storage medium 504 may be, for example, Random Access Memory (RAM), an Electrically Erasable Programmable Read-Only Memory (EEPROM), a storage device, an optical disc, etc. In some examples, the computer-readable storage medium may be a non-transitory storage medium, where the term 'non-transitory' does not encompass transitory propagating signals. As described in detail below, the computer-readable storage medium 504 may be encoded with a series of executable instructions 504-514. In some examples, computer-readable storage medium 504 may implement a memory 506, such as the first memory 104 and/or the second memory 106 of FIGs. 1-2. Memory 506 may be any non-volatile memory, such as EEPROM, flash memory, etc.

As illustrated, the computer-readable storage medium 504 may store instructions that, when executed, cause the computing apparatus 500 to store a wireless network credential for the computing apparatus in memory of the computing apparatus. Additionally, instructions 510 may cause the computing apparatus 500 to, responsive to receipt of a request from an agent application installed on an OS of the computing apparatus to update the wireless network credential, access an encrypted wireless network credential stored in the memory. Instructions 512 may cause the computing apparatus 500 to decrypt the encrypted wireless network credential, and instructions 514 may cause the computing apparatus 500 to apply the decrypted wireless network credential to the OS of the computing apparatus for access to a wireless communications network. In various examples, as discussed herein, the agent application may execute in the OS of the computing apparatus and firmware executes in a system management mode driver of the computing apparatus. In some examples, the computer-readable storage medium 504 may store instructions that, when executed, cause the processor 502 to, responsive to receipt by the system management mode driver of a request to update the wireless network credential, retrieve the wireless network credential, send the wireless network credential to the agent, and decrypt the wireless network credential using the agent (as discussed with regards to FIG. 4C). In various examples, this may permit the firmware driver to connect to the wireless communications network responsive to decrypting the wireless network credential and in accordance with a network credential update policy. For instance, how and when the network credentials are updated may be specified by a network credential update policy managed by IT administration. Such policy may indicate that the network credentials are updated at specific periodic times, after each boot of the computing apparatus, and/or upon the occurrence of other specified events.

The computer-readable storage medium 504 is not limited to the instructions illustrated in FIG. 5, and additional and/or different instructions may be stored and executed by processor 502 and/or other components of computing apparatus 500. For instance, the computer-readable storage medium 504 may store instructions that, when executed, cause the computing apparatus 500 to provision, using an agent application installed on the computing apparatus, a wireless network credential, and encrypt, using the agent application, the wireless network credential. Responsive to a reboot of the computing apparatus (as discussed with regards to FIG. 4B), the computing apparatus 500 may transfer the encrypted wireless network credential to firmware. Further, the computer-readable storage medium may store instructions that cause the processor 502 to store the encrypted wireless network credential, during the reboot and using the firmware.

As discussed herein, the computer-readable storage medium 504 may store instructions to encrypt the network credential using, a first key to sign provisioning commands to enable the agent to transfer data to the firmware, a second key to remove and deactivate the agent from the computing apparatus, and a third key to encrypt and decrypt a wireless network credential that is exchanged between an OS of the computing apparatus and the firmware. Moreover, the computer-readable storage medium 504 may store instructions that, when executed, cause the computing apparatus 500 to encrypt an activation command with the first key and send the encrypted activation command to the firmware to activate the agent, provide an authorization value to the agent to protect the third key, and responsive to receipt, by the agent, of the authorization value, create the third key to transfer the encrypted wireless network credential to the firmware. In some examples, the computer-readable storage medium 504 includes instructions that, when executed, cause the computing apparatus 500 to create the third key to include an authorization value as a signature to protect that third key, responsive to receipt by the agent of the authorization value.

## Claims

1. A computing apparatus (100), comprising:
a processor (102);
a first memory (104) to store an operating system (202) of the computing apparatus (100), wherein the operating system (202) is to, responsive to power-on of the computing apparatus (100):
access an agent application (110) in the first memory (104);
provision a wireless network credential using the agent application (110); and
encrypt the wireless network credential using the agent application (110); and
a second memory (106) to store firmware (108) for initiating the computing apparatus (100);
a third memory (103); and
a controller (126,226) communicatively coupled to the first memory (104), the second memory (106), and the third memory (103), wherein the firmware (108) is to, in response to receiving the encrypted wireless network credential from the first memory (104), store, via the controller (126,226), the encrypted wireless network credential in the third memory (103).

2. The computing apparatus (100) of claim 1, wherein the operating system (202) is to provision the agent application (110) by a user with administrative privileges.

3. The computing apparatus (100) of claim 1, wherein third memory (103) is a flash memory.

4. The computing apparatus (100) of claim 1, wherein the operating system (202) is to execute instructions in the first memory (104) to:
in response to receipt of a personal identifier, protect access to a subset of encryption keys used to encrypt the wireless network credential;
create the subset of encryption keys and store data indicative of the subset of encryption keys on the first memory (104); and
send the data indicative of the subset of encryption keys to the second memory (106).

5. The computing apparatus (100) of claim 1, wherein the operating system (202) is to access the agent application (110) at boot-up of the operating system (202).

6. The computing apparatus (100) of claim 1, wherein the operating system (202) is to:
in response to receipt of a subset of encryption keys used to encrypt the wireless network credential from a storage location remote to the first memory (104), send data indicative of the subset of encryption keys to the second memory (106).

7. A non-transitory computer-readable storage medium comprising instructions that when executed cause a computing apparatus (100), which comprises a first memory (104) to store an operating system of the computing apparatus, a second memory (106) to store firmware for initiating the computing apparatus , a third memory (103), and a controller (126,226) communicatively coupled to the first memory, the second memory, and the third memory, to:
provision, using an agent application (110) installed in the first memory (104) of
the computing apparatus, a wireless network credential;
encrypt, using the agent application (110), the wireless network credential;
responsive to a reboot of the computing apparatus, transfer the encrypted wireless network credential to firmware (108) of the computing apparatus; and
store, via the controller (126,226), the encrypted wireless network credential in the third memory (103), during reboot of the computing apparatus (100) and using the firmware (108).

8. The non-transitory computer-readable storage medium of claim 7, wherein the wireless network credential is encrypted using:
a first key to sign provisioning commands to enable the agent application (110) to transfer data to the firmware (108);
a second key to remove and deactivate the agent application (110) from the computing apparatus; and
a third key to encrypt and decrypt a wireless network credential that is exchanged between an operating system (202) of the computing apparatus (100) and the firmware (108).

9. The non-transitory computer-readable storage medium of claim 8, including instructions that when executed cause the computing apparatus (100) to:
encrypt an activation command with the first key and send the encrypted activation command to the firmware (108) to activate the agent application (110);
provide an authorization value to the agent application (110) to protect the third key; and
responsive to receipt, by the agent application (110), of the authorization value, create the third key to transfer the encrypted wireless network credential to the firmware (108).

10. The non-transitory computer-readable storage medium of claim 8, including instructions that when executed cause the computing apparatus (100) to:
responsive to receipt by the agent application (110), from the firmware (108), of an authorization value to protect the third key, create the third key to include the authorization value as a signature to protect the third key.

11. The non-transitory computer-readable storage medium of claim 7, including instructions that when executed cause the computing apparatus (100) to, responsive to a reboot of the computing apparatus:
request access to a wireless network;
retrieve the encrypted wireless network credential; and
decrypt the wireless network credential.

## Patentansprüche

1. Rechenvorrichtung (100), die Folgendes umfasst:
einen Prozessor (102);
einen ersten Speicher (104) zum Speichern eines Betriebssystems (202) der Rechenvorrichtung (100), wobei das Betriebssystem (202), als Reaktion auf ein Einschalten der Rechenvorrichtung (100), für Folgendes dient:
Zugreifen auf eine Agentenanwendung (110) in dem ersten Speicher (104);
Bereitstellen eines Berechtigungsnachweises eines drahtlosen Netzes unter Verwendung der Agentenanwendung (110); und
Verschlüsseln des Berechtigungsnachweises eines drahtlosen Netzes unter Verwendung der Agentenanwendung (110); und
einen zweiten Speicher (106) zum Speichern von Firmware (108) zum Initiieren der Rechenvorrichtung (100);
einen dritten Speicher (103); und
eine Steuerung (126, 226), die mit dem ersten Speicher (104), dem zweiten Speicher (106) und dem dritten Speicher (103) kommunikativ gekoppelt ist, wobei die Firmware (108) dazu dient, als Reaktion auf ein Empfangen des verschlüsselten Berechtigungsnachweises eines drahtlosen Netzes von dem ersten Speicher (104), über die Steuerung (126, 226) den verschlüsselten Berechtigungsnachweis eines drahtlosen Netzes in dem dritten Speicher (103) zu speichern.

2. Rechenvorrichtung (100) nach Anspruch 1, wobei das Betriebssystem (202) dazu dient, die Agentenanwendung (110) durch einen Benutzer mit Administratorrechten bereitzustellen.

3. Rechenvorrichtung (100) nach Anspruch 1, wobei der dritte Speicher (103) ein Flash-Speicher ist.

4. Rechenvorrichtung (100) nach Anspruch 1, wobei das Betriebssystem (202) dazu dient, Anweisungen in dem ersten Speicher (104) auszuführen für Folgendes:
als Reaktion auf einen Empfang eines Personenkennzeichens, Schützen eines Zugriffs auf eine Untergruppe von Verschlüsselungsschlüsseln, die zum Verschlüsseln des drahtlosen Berechtigungsnachweises eines drahtlosen Netzes verwendet werden;
Erstellen der Untergruppe von Verschlüsselungsschlüsseln und Speichern von Daten, die die Untergruppe von Verschlüsselungsschlüsseln auf dem ersten Speicher (104) angeben; und
Senden der Daten, die die Untergruppe von Verschlüsselungsschlüsseln angeben, an den zweiten Speicher (106).

5. Rechenvorrichtung (100) nach Anspruch 1, wobei das Betriebssystem (202) dazu dient, auf die Agentenanwendung (110) bei einem Hochfahren des Betriebssystems (202) zuzugreifen.

6. Rechenvorrichtung (100) nach Anspruch 1, wobei das Betriebssystem (202) für Folgendes dient:
als Reaktion auf einen Empfang einer Untergruppe von Verschlüsselungsschlüsseln, die zum Verschlüsseln des drahtlosen Berechtigungsnachweises eines drahtlosen Netzes von einem Speicherungsort, der von dem ersten Speicher (104) entfernt ist, verwendet werden, Senden von Daten, die die Untergruppe von Verschlüsselungsschlüsseln angeben, an den zweiten Speicher (106).

7. Nichtflüchtiges computerlesbares Speicherungsmedium, das Anweisungen umfasst, die, wenn sie ausgeführt werden, eine Rechenvorrichtung (100), die einen ersten Speicher (104) zum Speichern eines Betriebssystems der Rechenvorrichtung, einen zweiten Speicher (106) zum Speichern von Firmware zum Initiieren der Rechenvorrichtung, einen dritten Speicher (103) und eine Steuerung (126,226), die mit dem ersten Speicher, dem zweiten Speicher und dem dritten Speicher kommunikativ gekoppelt ist, umfasst, zu Folgendem veranlassen:
Bereitstellen, unter Verwendung einer Agentenanwendung (110), die in dem ersten Speicher (104) der Rechenvorrichtung installiert ist, eines drahtlosen Berechtigungsnachweises eines drahtlosen Netzes;
Verschlüsseln, unter Verwendung der Agentenanwendung (110), des drahtlosen Berechtigungsnachweises eines drahtlosen Netzes;
als Reaktion auf einen Neustart der Rechenvorrichtung, Übertragen des verschlüsselten Berechtigungsnachweises eines drahtlosen Netzes auf Firmware (108) der Rechenvorrichtung; und
Speichern, über die Steuerung (126, 226), des verschlüsselten Berechtigungsnachweises eines drahtlosen Netzes in dem dritten Speicher (103) während eines Neustarts der Rechenvorrichtung (100) und unter Verwendung der Firmware (108).

8. Nichtflüchtiges computerlesbares Speicherungsmedium nach Anspruch 7, wobei der Berechtigungsnachweis eines drahtlosen Netzes unter Verwendung von Folgendem verschlüsselt ist;
einem ersten Schlüssel zum Signieren der Bereitstellungsbefehle zum Ermöglichen der Agentenanwendung (110), Daten an die Firmware (108) zu übertragen;
einem zweiten Schlüssel zum Entfernen der Agentenanwendung (110) von der Rechenvorrichtung;
und
einem dritten Schlüssel zum Verschlüsseln und Entschlüsseln eines drahtlosen Berechtigungsnachweises eines drahtlosen Netzes, der zwischen einem Betriebssystem (202) der Rechenvorrichtung (100) und der Firmware (108) ausgetauscht wird.

9. Nichtflüchtiges computerlesbares Speicherungsmedium nach Anspruch 8, das Anweisungen einschließt, die, wenn sie ausgeführt werden, die Rechenvorrichtung (100) zu Folgendem veranlassen:
Verschlüsseln eines Aktivierungsbefehls mit dem ersten Schlüssel und Senden des verschlüsselten Aktivierungsbefehls an die Firmware (108) zum Aktivieren der Agentenanwendung (110);
Liefern eines Autorisierungswerts an die Agentenanwendung (110) zum Schützen des dritten Schlüssels; und
als Reaktion auf einen Empfang, durch die Agentenanwendung (110), des Autorisierungswerts, Erstellen des dritten Schlüssels zum Übertragen des verschlüsselten Berechtigungsnachweises eines drahtlosen Netzes auf die Firmware (108).

10. Nichtflüchtiges computerlesbares Speicherungsmedium nach Anspruch 8, das Anweisungen einschließt, die, wenn sie ausgeführt werden, die Rechenvorrichtung (100) zu Folgendem veranlassen:
als Reaktion auf einen Empfang durch die Agentenanwendung (110), von der Firmware (108), eines Autorisierungswerts zum Schützen des dritten Schlüssels, Erstellen des dritten Schlüssels zum Einschließen des Autorisierungswerts als eine Signatur zum Schützen des dritten Schlüssels.

11. Nichtflüchtiges computerlesbares Speicherungsmedium nach Anspruch 7, das Anweisungen einschließt, die, wenn sie ausgeführt werden, die Rechenvorrichtung (100), als Reaktion auf einen Neustart der Rechenvorrichtung, zu Folgendem zu veranlassen:
Anfordern eines Zugriffs auf ein drahtloses Netz;
Abrufen des verschlüsselten Berechtigungsnachweises eines drahtlosen Netzes; und
Entschlüsseln des drahtlosen Berechtigungsnachweises eines drahtlosen Netzes.

## Revendications

1. Appareil informatique (100) comprenant :
un processeur (102) ;
une première mémoire (104) pour stocker un système d'exploitation (202) de l'appareil informatique (100), le système d'exploitation (202) étant destiné, en réponse à la mise sous tension de l'appareil informatique (100), à :
accéder à une application d'agent (110) dans la première mémoire (104) ;
fournir un justificatif de réseau sans fil à l'aide de l'application d'agent (110) ; et
chiffrer le justificatif de réseau sans fil à l'aide de l'application d'agent (110) ; et
une deuxième mémoire (106) pour stocker un micrologiciel (108) pour initialiser l'appareil informatique (100) ;
une troisième mémoire (103) ; et
un contrôleur (126, 226) couplé en communication à la première mémoire (104), à la deuxième mémoire (106) et à la troisième mémoire (103), le micrologiciel (108) étant destiné, en réponse à la réception du justificatif de réseau sans fil chiffré à partir de la première mémoire (104), à stocker, par l'intermédiaire du contrôleur (126, 226), le justificatif de réseau sans fil chiffré dans la troisième mémoire (103).

2. Appareil informatique (100) selon la revendication 1, dans lequel le système d'exploitation (202) est destiné à fournir à l'application d'agent (110) par un utilisateur avec des privilèges administratifs.

3. Appareil informatique (100) selon la revendication 1, dans lequel la troisième mémoire (103) est une mémoire flash.

4. Appareil informatique (100) selon la revendication 1, dans lequel le système d'exploitation (202) est destiné à exécuter des instructions dans la première mémoire (104) pour :
en réponse à la réception d'un identifiant personnel, protéger l'accès à un sous-ensemble de clés de chiffrement utilisées pour chiffrer le justificatif de réseau sans fil ;
créer le sous-ensemble de clés de chiffrement et stocker des données indicatives du sous-ensemble de clés de chiffrement sur la première mémoire (104) ; et
envoyer les données indicatives du sous-ensemble de clés de chiffrement à la deuxième mémoire (106).

5. Appareil informatique (100) selon la revendication 1, dans lequel le système d'exploitation (202) est destiné à accéder à l'application d'agent (110) au démarrage du système d'exploitation (202).

6. Appareil informatique (100) selon la revendication 1, dans lequel le système d'exploitation (202) est destiné à :
en réponse à la réception d'un sous-ensemble de clés de chiffrement utilisées pour chiffrer le justificatif de réseau sans fil à partir d'un emplacement de stockage distant de la première mémoire (104), envoyer des données indicatives du sous-ensemble de clés de chiffrement à la deuxième mémoire (106).

7. Support de stockage non transitoire lisible par ordinateur comprenant des instructions qui, lorsqu'elles sont exécutées, amènent un appareil informatique (100), qui comprend une première mémoire (104) à stocker un système d'exploitation de l'appareil informatique, une deuxième mémoire (106) pour stocker un micrologiciel pour initialiser l'appareil informatique, une troisième mémoire (103), et un contrôleur (126, 226) couplé en communication à la première mémoire, à la deuxième mémoire et à la troisième mémoire, pour :
fournir, à l'aide d'une application d'agent (110) installée dans la première mémoire (104) de l'appareil informatique, d'un justificatif de réseau sans fil ;
chiffrer, à l'aide de l'application d'agent (110), le justificatif de réseau sans fil ;
en réponse à un redémarrage de l'appareil informatique, transférer le justificatif de réseau sans fil chiffré au micrologiciel (108) de l'appareil informatique ; et
stocker, par l'intermédiaire du contrôleur (126, 226), le justificatif de réseau sans fil chiffré dans la troisième mémoire (103), pendant le redémarrage de l'appareil informatique (100) et à l'aide du micrologiciel (108).

8. Support de stockage non transitoire lisible par ordinateur selon la revendication 7, dans lequel le justificatif de réseau sans fil est chiffré à l'aide :
d'une première clé pour signer des commandes de provisionnement pour permettre à l'application d'agent (110) de transférer des données au micrologiciel (108) ;
d'une seconde clé pour supprimer et désactiver l'application d'agent (110) de l'appareil informatique ;
et
d'une troisième clé pour chiffrer et déchiffrer un justificatif de réseau sans fil qui est échangé entre un système d'exploitation (202) de l'appareil informatique (100) et le micrologiciel (108).

9. Support de stockage non transitoire lisible par ordinateur selon la revendication 8, comportant des instructions qui, lorsqu'elles sont exécutées, amènent l'appareil informatique (100) à :
chiffrer une commande d'activation avec la première clé et envoyer une commande d'activation chiffrée au micrologiciel (108) pour activer l'application d'agent (110) ;
fournir une valeur d'autorisation à l'application d'agent (110) pour protéger la troisième clé ; et en réponse à la réception, par l'application d'agent (110), de la valeur d'autorisation, créer la troisième clé pour transférer le justificatif de réseau sans fil chiffré au micrologiciel (108).

10. Support de stockage non transitoire lisible par ordinateur selon la revendication 8, comportant des instructions qui, lorsqu'elles sont exécutées, amènent l'appareil informatique (100) à :
en réponse à la réception par l'application d'agent (110), à partir du micrologiciel (108), d'une valeur d'autorisation pour protéger la troisième clé, créer la troisième clé pour inclure la valeur d'autorisation en tant que signature pour protéger la troisième clé.

11. Support de stockage non transitoire lisible par ordinateur selon la revendication 7, comprenant des instructions qui, lorsqu'elles sont exécutées, amènent l'appareil informatique (100) à, en réponse à un redémarrage de l'appareil informatique :
demander l'accès à un réseau sans fil ;
récupérer le justificatif de réseau sans fil chiffré ; et
déchiffrer le justificatif de réseau sans fil.
